# FASCICULE DE BREVET EUROPEEN

(11) **EP 3 013 192 B1**
(45) Date de publication et mention de la délivrance du brevet: **09.08.2017**
(21) Numéro de dépôt: 14732217.6
(22) Date de dépôt: 24.06.2014
(51) Int. Cl.: A47J 31/36

(54) **DISPOSITIF POUR PREPARER DES BOISSONS INFUSEES COMPRENANT UNE TUBULURE D'INJECTION DANS LA CHAMBRE D'INFUSION**
VORRICHTUNG ZUR HERSTELLUNG VON AUFGUSSGETRÄNKEN MIT EINEM INJEKTIONSSCHLAUCH FÜR DIE AUFGUSSKAMMER
DEVICE FOR PREPARING INFUSED DRINKS, COMPRISING AN INJECTION TUBE LEADING INTO THE INFUSION CHAMBER

(30) Priorité: 25.06.2013 BE 201300437
(43) Date de publication de la demande: 04.05.2016
(73) Titulaire: TCONCEPT COMPANY S.P.R.L., 1325 Corroy-le-Grand (BE)
(72) Inventeur: VAN BELLEGHEM, Luc, 1325 Corroy-le-Grand (BE); BEAUFILS, Yohann, 14200 Hérouville St Clair (FR)
(74) Mandataire: Office Kirkpatrick
(86) Numéro de dépôt international: PCT/EP2014/063299
(87) Numéro de publication internationale: WO 2014/206991

(56) Documents cités:
- EP-A1- 2 112 093
- EP-A1- 2 159 167

## Description

La présente invention se rapporte à un dispositif pour préparer des boissons infusées comprenant:
- un support agencé pour recevoir une capsule contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser, dans une position dans laquelle ladite face frontale est sensiblement verticale,
- des moyens d'injection agencés pour introduire un liquide d'infusion dans ladite capsule, lorsque ledit support reçoit une capsule,
- une chambre d'infusion présentant une ouverture sensiblement verticale, ladite ouverture sensiblement verticale étant agencée pour être en communication fluidique avec ladite paroi filtrante, ladite bague comportant des moyens d'étanchéité agencés pour maintenir la communication fluidique étanche par rapport à un milieu environnant, extérieur à une zone d'échange fluidique, et
- une sortie munie de moyens de fermeture/ouverture agencés pour permettre à un liquide infusé de s'écouler de la chambre d'infusion.

Un tel dispositif est connu par exemple du document EP2112093. Toutefois, selon ce document l'injection d'eau est effectuée au travers de la face dorsale de la capsule, nécessitant dès lors d'effectuer un perçage de celle-ci.

Malheureusement, un perçage dorsal de la capsule requiert d'une part un alignement horizontal pratiquement parfait de la pointe servant à percer la face dorsale et d'autre part de fabriquer une capsule avec une zone de rupture. Dès lors, la fabrication d'un tel dispositif est complexe car elle demande de la mécanique de précision pour obtenir une pointe parfaitement perpendiculaire à la face dorsale à rompre que l'utilisation du dispositif au cours du temps met en péril. De plus, la capsule reste souvent empalée sur la pointe et ne peut donc être aisément évacuée sans intervention humaine, qui elle-même requiert parfois de démonter une partie du dispositif ou de rendre la zone dans laquelle la capsule se trouve bloquée aisément accessible. Dans tous les cas, l'utilisation de la pointe pour percer la face dorsale de la capsule présente certains inconvénients au niveau de la conception de la machine, au niveau de la capsule et au niveau alimentaire car la pointe n'est pas nettoyée ou changée après utilisation.

L'invention a pour but de pallier les inconvénients de l'état de la technique en procurant une invention permettant de simplifier la conception de la machine et de solutionner les problèmes de capsules bloquées et/ou empalées sur ladite pointe.

Pour résoudre ce problème, il est prévu suivant l'invention, un dispositif tel qu'indiqué au début caractérisé en ce qu'il comprend en outre une tubulure d'injection dudit liquide d'infusion reliée à une partie supérieure de ladite chambre d'infusion à proximité de ladite ouverture sensiblement verticale.

De cette façon, le liquide d'infusion pénètre au moyen de la tubulure d'injection dans ladite chambre d'infusion par le haut de la chambre d'infusion et s'écoule de manière à remplir progressivement l'ensemble constitué de la chambre d'infusion en communication fluidique avec ledit récipient défini par ladite enveloppe solide s'étendant entre ladite bague et ladite face dorsale, dans lequel se trouve la matière à infuser. Le récipient de la capsule est également rempli progressivement à la même vitesse que la chambre d'infusion.

Dans une variante, le liquide d'infusion qui alimente la chambre d'infusion s'écoule ainsi du haut vers le bas créant des turbulences dans une partie du liquide d'infusion déjà présent formant ainsi des turbulences dans le liquide d'infusion contenu dans la chambre d'infusion permettant d'améliorer l'homogénéité du liquide d'infusion qui devient au cours du temps le liquide infusé et un brassage de ce liquide d'infusion. De plus, cette injection de liquide d'injection via la chambre d'infusion permet d'obtenir une différence de température du liquide d'infusion présent dans la chambre d'infusion et celui présent dans le récipient de la capsule comprise entre 3 et 10°C et typiquement d'environ 5°C. Ceci permet de pouvoir atteindre une température optimale pour l'infusion dans le récipient de la capsule, tout en gardant le liquide d'infusion dans la chambre d'infusion à une température légèrement supérieure, permettant donc ainsi de servi une boisson infusée encore suffisamment chaude après la durée de l'infusion. Notons que durant toute la phase d'injection de liquide d'infusion, le liquide d'infusion nouvellement injecté réchauffe le liquide d'infusion déjà présent.

Dans une autre variante, ladite tubulure d'injection est prolongée d'un coude agencé pour injecter ledit liquide d'infusion au travers de ladite face frontale de ladite capsule. De cette façon, le liquide d'infusion alimente en premier lieu le récipient de la capsule et ensuite la chambre d'infusion. Le liquide d'infusion s'écoule ainsi du haut vers le bas créant des turbulences dans une partie du liquide d'infusion déjà présent dans le récipient de la capsule formant ainsi des turbulences dans le liquide d'infusion permettant d'améliorer l'homogénéité du liquide d'infusion qui devient au cours du temps le liquide infusé et un brassage de ce liquide d'infusion. De plus, cette injection de liquide d'injection dans le récipient de la capsule permet d'obtenir une différence de température du liquide d'infusion présent dans le récipient de la capsule et celui présent dans la chambre d'infusion comprise entre 3 et 10°C et typiquement d'environ 5°C. Ceci permet de pouvoir atteindre une température optimale pour l'infusion dans le récipient de la capsule, tout en gardant le liquide d'infusion dans la chambre d'infusion à une température légèrement inférieure, permettant donc ainsi de servir une boisson infusée encore suffisamment chaude après la durée de l'infusion. Notons que durant toute la phase d'injection de liquide d'infusion, le liquide d'infusion nouvellement injecté réchauffe le liquide d'infusion déjà présent.

Avantageusement, la chambre d'infusion du dispositif selon la présente invention est au moins formée partiellement d'une matière à base de polyfluorure, comme par exemple du PTFE, FEP, ou PFA.

Dans une forme de réalisation particulière, ledit support de capsule est un siège présentant une structure significativement ouverte.

De préférence, le dispositif selon la présente invention comprend en outre des moyens de nettoyage agencés pour introduire un liquide de rinçage dans ladite chambre d'infusion.

Dans une forme de réalisation particulièrement préférée de la présente invention, le dispositif comprend un moyen de chauffage dudit liquide d'infusion.

Avantageusement, le dispositif selon la présente invention, comprenant en outre, en outre un réservoir de liquide d'infusion, relié ou comprenant ledit moyen de chauffage dudit liquide d'infusion.

Dans une forme de réalisation avantageuse, le dispositif selon la présente invention comprend en outre une pompe reliée d'une part à ladite tubulure d'injection de liquide d'infusion et à une alimentation de liquide d'infusion, éventuellement sous la forme dudit réservoir de liquide d'infusion.

Le dispositif selon l'invention comprend en outre, de préférence, une pompe reliée d'une part à ladite tubulure d'injection de liquide d'infusion et à une alimentation de liquide d'infusion, raccordée audit dispositif de chauffage dudit liquide d'infusion.

Dans une variante selon l'invention, le dispositif comprend en outre un dispositif régulateur de pression, relié à ladite tubulure d'injection de liquide d'infusion et à une alimentation de liquide d'infusion, éventuellement en amont ou en aval de ladite pompe, lorsqu'elle est présente.

Dans un mode de réalisation particulièrement préférentiel, dans lequel ladite tubulure d'injection de liquide d'infusion présente une zone rectiligne, dont une extrémité est reliée à ladite chambre d'infusion, ladite zone rectiligne étant sensiblement verticale.

Dans encore un autre mode de réalisation particulièrement préférentiel, ladite zone rectiligne de ladite tubulure d'injection de liquide d'infusion est au moins formée partiellement d'une matière à base de polyfluorure, comme par exemple du PTFE, FEP, or PFA.

De préférence, ladite zone rectiligne de ladite tubulure d'injection de liquide d'infusion est solidaire de ladite chambre d'infusion et est par exemple obtenue par moulage simultané de ladite chambre d'infusion et de ladite zone rectiligne.

De manière tout à fait avantageuse et préférée, dans lequel ladite chambre d'infusion comporte un sommet par lequel passe un premier plan tangent de tête horizontal et un plan médian séparant la chambre d'infusion en deux parties dont une première partie comporte ladite ouverture sensiblement verticale, ladite ouverture sensiblement verticale présentant également un sommet par lequel passe un deuxième plan tangent horizontal, parallèle audit premier plan tangent de tête horizontal, ladite tubulure d'injection dudit liquide d'infusion étant reliée à ladite chambre d'infusion au travers d'un orifice de passage de liquide d'infusion traversant une paroi extérieure de ladite chambre d'infusion, ledit orifice de passage de liquide d'infusion étant situé entre le premier et le deuxième plans tangents et dans ladite première partie.

D'autres formes de réalisation du dispositif suivant l'invention sont indiquées dans les revendications annexées.

L'invention a aussi pour objet un procédé de préparation de boissons infusées, comprenant les étapes de :
- introduction d'une capsule contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser, dans une position dans laquelle ladite face frontale est sensiblement verticale, sur un support de capsule,
- injection d'un liquide d'infusion dans ledit récipient de ladite capsule,
- une infusion dudit liquide d'infusion avec ladite matière sèche à infuser de façon à former ladite boisson infusée dans ladite chambre d'infusion en communication fluidique avec le récipient de la capsule, et
- évacuation dudit liquide infusé par une ouverture localisée dans le fond de ladite chambre d'infusion après ladite étape d'infusion.

Ce procédé est caractérisé en ce que ladite injection d'un liquide d'infusion dans ledit récipient de ladite capsule a lieu par injection dudit liquide d'infusion dans un ensemble constitué de la chambre d'infusion en communication fluidique avec ledit récipient de ladite capsule, ledit liquide d'infusion percolant au travers de ladite paroi filtrante pour pénétrer dans ledit récipient de la capsule et dans ladite chambre d'infusion.

Avantageusement, ledit liquide d'infusion pénètre au travers de la paroi filtrante dans la capsule et percole ensuite dans l'autre sens vers la chambre d'infusion.

Dans un mode de réalisation avantageux du procédé selon la présente invention, une partie de l'étape d'infusion a lieu simultanément à ladite étape d'injection.

Avantageusement, ladite injection dudit liquide d'infusion est effectuée de haut en bas et provoque des turbulences dans le liquide d'infusion déjà présent dans l'ensemble constitué de la chambre d'infusion et de la capsule, de manière à homogénéisé le contenu du liquide d'infusion.

De préférence, le procédé selon la présente invention comporte une étape de nettoyage dans laquelle un fluide de rinçage est introduit et évacué de la chambre d'infusion.

Avantageusement, le procédé comprend aussi une étape d'évacuation de la capsule de son support après évacuation dudit liquide infusé de la chambre d'infusion

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue schématique d'un dispositif selon l'invention.
La figure 2 est une vue schématique d'une chambre d'infusion et d'une capsule selon la présente invention..

Sur les figures, les éléments identiques ou analogues portent les mêmes références.

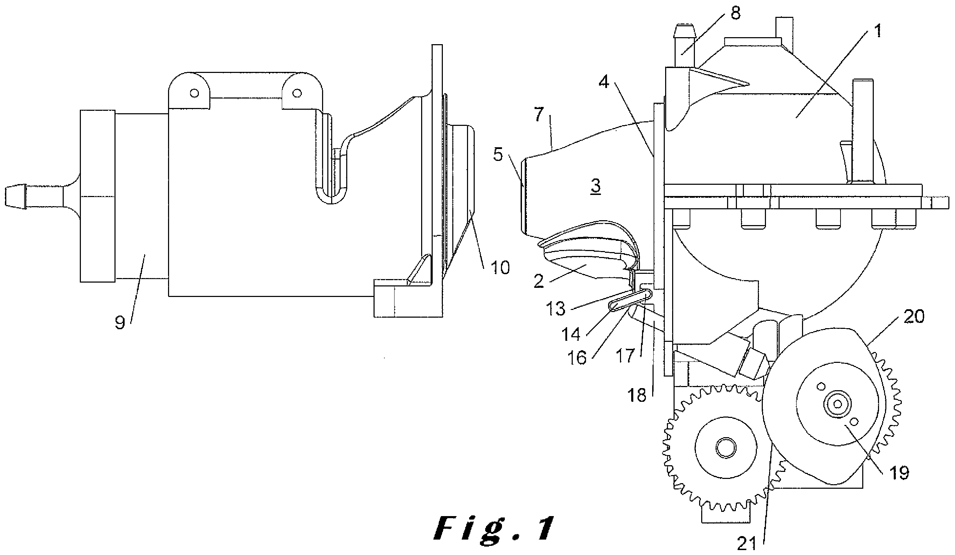

Comme on peut le voir à la figure 1, le dispositif pour préparer des boissons infusées comprend un support (2) agencé pour recevoir une capsule (3) contenant une matière à infuser à l'état sec munie d'une face frontale (4) comprenant une paroi filtrante, d'une bague (non illustrée) entourant ladite face frontale (4), d'une face dorsale (5), opposée à ladite face frontale (4) et d'une enveloppe solide (7) s'étendant entre ladite bague et ladite face dorsale (4) et définissant un récipient agencé pour contenir ladite matière à infuser, dans une position dans laquelle ladite face frontale (4) est sensiblement verticale. Ce support (2) prend la forme d'un siège présentant une structure significativement ouverte et pivotant sur un axe.

Le dispositif comporte également des moyens d'injection agencés pour introduire un liquide d'infusion dans ladite capsule lorsque ledit support (2) reçoit une capsule (3), et une chambre d'infusion (1) présentant une ouverture sensiblement verticale (8), ladite ouverture sensiblement verticale (8) étant agencée pour être en communication fluidique avec ladite paroi filtrante, ladite bague comportant des moyens d'étanchéité agencés pour maintenir la communication fluidique étanche par rapport à un milieu environnant, extérieur à une zone d'échange fluidique.

Le dispositif selon l'invention comprend aussi une sortie munie de moyens de fermeture/ouverture agencés pour permettre à un liquide infusé de s'écouler de la chambre d'infusion.

La tubulure d'injection dudit liquide d'infusion reliée à une partie supérieure de ladite chambre d'infusion à proximité de ladite ouverture sensiblement verticale (8).

La tubulure d'injection de liquide d'infusion présente une zone rectiligne, dont une extrémité est reliée à ladite chambre d'infusion (1), ladite zone rectiligne étant sensiblement verticale. La zone rectiligne de ladite tubulure d'injection de liquide d'infusion est au moins formée partiellement d'une matière à base de polyfluorure, comme par exemple du PTFE, FEP, ou PFA.

De plus, la zone rectiligne de ladite tubulure d'injection de liquide d'infusion est solidaire de ladite chambre d'infusion (1) et est, par exemple obtenue par moulage simultané de ladite chambre d'infusion (1) et de ladite zone rectiligne.

Comme on peut le voir à la figure 1, la chambre d'infusion (1) comporte un sommet par lequel passe un premier plan tangent de tête horizontal et un plan médian séparant la chambre d'infusion (1) en deux parties dont une première partie comporte ladite ouverture sensiblement verticale (8), ladite ouverture sensiblement verticale (8) présentant également un sommet par lequel passe un deuxième plan tangent horizontal, parallèle audit premier plan tangent de tête horizontal, ladite tubulure d'injection dudit liquide d'infusion étant reliée à ladite chambre d'infusion (1) au travers d'un orifice de passage de liquide d'infusion traversant une paroi extérieure de ladite chambre d'infusion (1), ledit orifice de passage de liquide d'infusion étant situé entre le premier et le deuxième plans tangents et dans ladite première partie.

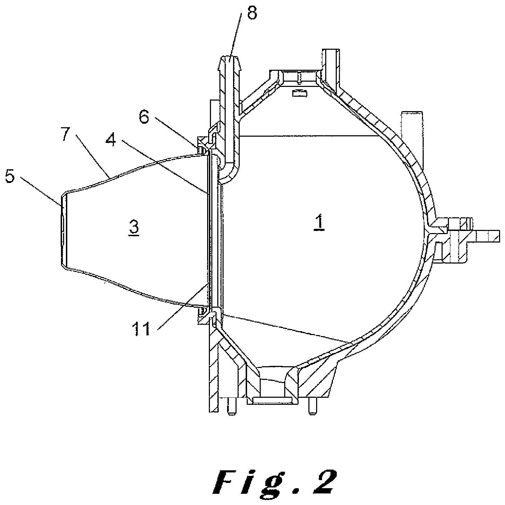

La figure 2 représente une chambre d'infusion (1) et une capsule (3) selon l'invention. La capsule (3) est prévue pour contenir une matière à infuser à l'état sec et est munie d'une face frontale (4) comprenant une paroi filtrante (11), d'une bague (6) qui entoure la face frontale (4), d'une face dorsale (5), opposée à ladite face frontale (4) et définissant un récipient agencé pour contenir ladite matière à infuser, dans une position dans laquelle ladite face frontale (4) est sensiblement verticale.

Un aspect avantageux de la présente invention concerne un dispositif destiné à recevoir une capsule (3) d'ingrédients et d'extraire l'ingrédient en injectant un liquide au sein d'une capsule (3) et dans et via une chambre d'infusion (1).

La capsule (3) est positionnée entre deux parties. Les deux parties sont disposés de manière à être mobile l'une par rapport à l'autre, d'une position ouverte - pour l'insertion ou le retrait d'une capsule (3) - à une position de fermeture - pour faire passer un liquide chauffé au sein de la capsule (3).

Au moins une des parties mobiles est actionnée hydrauliquement et déplaçable dans la position fermée par le dispositif d'injection de liquide.

A cette fin, la dispositif comporte un cylindre (9) comprenant une première extrémité et une deuxième extrémité, ladite première extrémité comprenant au moins une zone de contact agencée pour pousser ladite face dorsale de la capsule et des moyens de translation agencés pour créer un mouvement horizontal de translation relatif entre ledit cylindre (9) et ladite chambre d'infusion (9) de manière à maintenir l'étanchéité entre la capsule (3) et ladite chambre d'infusion (1) par une force de compression exercée sur lesdits moyens d'étanchéité maintenant la communication fluidique, lesdits moyens de translation sont reliés audit cylindre (9), ledit cylindre (9) présentant une première position reculée et une deuxième position de contact, lesdits moyens de translation étant agencés pour déplacer ledit cylindre (9) entre ladite première position et ladite deuxième position, correspondant à une position dans laquelle ladite capsule (3) est en contact étanche avec ladite chambre d'infusion (1) et où ladite force de compression est exercée sur lesdits moyens d'étanchéité.

Un simple moyen de translation utilisant l'énergie présente ou humaine est prévu, sans dispositif additionnel comme un moteur basse tension permet d'effecteur une translation relative entre la chambre d'infusion (1) et un cylindre (9) maintenant l'étanchéité entre la capsule (3) et la chambre d'infusion (1) pour assurer la communication fluidique étanche entre les deux.

En règle générale, ce dispositif est composé d'une machine de préparation de boisson pour recevoir des capsules (3) d'ingrédients. Par exemple, la machine est une machine de préparation du café, du thé, du chocolat ou de la soupe. En particulier, l'appareil est agencé pour la préparation à l'intérieur d'une chambre d'infusion (1) par passage d'eau chaude ou d'un autre liquide au sein d'une capsule (3) contenant un ingrédient de la boisson à préparer, tel que du café moulu ou du thé ou du chocolat ou du cacao ou de la poudre de lait.

Le dispositif de la présente invention va enfermer une capsule (3) comportant de matières à infuser nécessitant chacune différentes températures d'infusion. Par exemple, certains thés infuseront entre 60 et 95°C.

Le but de la présente invention est de permettre aux différentes matières à infuser enfermées au sein de la capsule (3) une paroi filtrante d'être en contact avec un liquide à la température la plus proche de celle requise par la matière à infuser.

Le dispositif comprend également une chambre d'infusion (1), mise en connexion et en étanchéité avec la capsule (3). Celle-ci sera d'une capacité permettant de servir au minimum une tasse. Le processus d'injection du liquide permettra donc le remplissage de la chambre d'infusion (1). Ce processus engendrera une perte de température du liquide injecté au contact de la matière de la chambre d'infusion (1).

La présente invention permet avantageusement de maintenir au sein de la capsule (3) la température du liquide injecté à une température la plus proche de celle requise en injectant le liquide au sein de la capsule (3). La paroi filtrante va créer une inertie de dispersion de la température en faveur du liquide maintenu dans la capsule (3).

La présente invention permet également grâce à ce processus d'injection du liquide de pouvoir garantir une homogénéité de l'infusion. En effet, l'injonction de liquide durant l'infusion va brasser le liquide contenu dans la capsule (3) avec celui-contenu dans la chambre d'infusion et va également permettre d'agiter la matière à infuser contenue dans la capsule (3).

La présente invention va également éviter avantageusement un problème fréquemment rencontré dans de nombreux dispositifs de préparation de boissons chaudes utilisant des capsules (3) ou autres enveloppes rigides ou semi-rigides et qui viennent, au travers d'un dispositif percer l'enveloppe afin d'injecter au travers de cet outil de percement le liquide. L'introduction de cet outil et son extraction nécessitent des forces importantes. L'éjection de la capsule peut être rendue plus complexe par l'extraction de cet outil.

A cette fin, ledit support (2) est sous la forme d'un siège comportant une structure basale de forme complémentaire à la forme de ladite enveloppe. Le siège est sensiblement ouvert sur le haut pour permettre une réception de ladite capsule (3) lors d'une descente de celle-ci et comprend une saillie (13) munie d'une zone de fixation (15) et d'un segment solidaire de ladite zone de fixation (15) et formant un angle compris entre 25 et 80 degrés avec un plan horizontal médian dudit siège (2) ainsi qu'une jonction, entre ladite zone de fixation (15) et le segments, munie d'un orifice au travers duquel passe un axe de pivot, sensiblement transversal à ladite saillie. Ladite zone de fixation (15) reliant le siège (2) à ladite jonction (17) alors que le segment (14) se prolonge de ladite jonction (17) à une extrémité libre, et comportant une zone d'appui pour le piston suiveur (18).

Le piston suiveur (18) est mis en mouvement par une came (19) , par exemple solidaire d'un engrenage actionné par un servo-moteur ou par un arbre à came couplé à une vannevanne. La came (19) comprend au moins une première partie de profil (21) et une deuxième partie de profil (20), chaque partie de profil mettant en mouvement ledit piston suiveur.

La première partie (21) de profil correspond à une position de piston suiveur telle que le piston exerce une pression sur ladite zone d'appui de manière que le siège présente une position de réception de ladite capsule (3) et assure l'alignement de la face frontale (4) de la capsule (3) avec ladite ouverture sensiblement verticale (8) de ladite chambre d'infusion (1).

La deuxième partie (20) de profil correspond à une position de piston suiveur (18) telle que le piston se relâche de la position d'infusion vers une position de repos et n'exerce plus de pression sur ladite zone d'appui, permettant de libérer la capsule (3) et de permettre son évacuation vers un réceptacle agencé pour recevoir ladite capsule (3) à évacuer.

En fait, le dispositif selon l'invention permet de faire passer la capsule (3) depuis une position d'insertion à une position d'infusion lorsqu'au moins une des deux parties mobiles du dispositif positionne celui-ci en position fermée, elle le passe dans sa position d'éjection et lorsque la partie mobile est ouverte après l'infusion, la capsule (3) est dégagée naturellement sous le simple effet de la gravitation. Elle tombe dans un tiroir ou tout autre moyen de récupération de capsule (3) usagée et le consommateur est prêt pour recharger le dispositif.

Afin de gérer ces différentes positions, le dispositif comporte un siège pivotant permettant d'être mis dans une position de réception de la capsule (3) ou mis dans une position permettant l'éjection de la capsule(3) par gravité.

Le dispositif selon la présente invention coordonne également les positions du siège, support (2) de la capsule (3) en tenant compte des processus inhérents à une infusion comprenant une chambre d'infusion (1).

Avantageusement, cette chambre d'infusion (1) connait un ou des cycles d'injection d'eau chauffée, permettant l'infusion des matières contenues dans la capsule (3). Cette phase d'injection d'eau nécessitera un parfait positionnement et mise en étanchéité de la capsule (3) avec la chambre et une position fermée du canal d'écoulement du liquide infusé.

A l'issue de la durée d'infusion le canal d'écoulement sera ouvert en direction de la tasse.

Typiquement ce dispositif comprend une vanne multi-voies. Une fois le liquide écoulé, un second processus débute afin d'injecter un liquide ou un gaz de rinçage dans la chambre d'infusion (1). Ce processus débute avec le support de la capsule(3) maintenue dans sa position de réception et toujours en étanchéité avec la chambre (1). Ensuite, le support (2) de la capsule (3) passera en position d'éjection et la capsule (3) sera éjectée par gravité. Cette phase permettant à la fin du cycle de rinçage de s'effectuer sans présence de la capsule (3) et donc sans risque que le liquide infusé qui pourrait encore s'y trouver s'écoule dans la chambre d'infusion (1).

Les positions du support dictées par la came sont donc couplées aux positions de la vanne multi-voies gérant l'écoulement du liquide infusé ou du liquide de rinçage de la chambre d'infusion (1).

Il est bien entendu que la présente invention n'est en aucune façon limitée aux formes de réalisations décrites ci-dessus et que bien des modifications peuvent y être apportées sans sortir du cadre des revendications annexées.

## Revendications

1. Dispositif pour préparer des boissons infusées comprenant:
- un support (2) agencé pour recevoir une capsule (3) contenant une matière à infuser à l'état sec munie d'une face frontale (4) comprenant une paroi filtrante (11), d'une bague (6) entourant ladite face frontale (4), d'une face dorsale (5), opposée à ladite face frontale (4) et d'une enveloppe solide (7) s'étendant entre ladite bague (6) et ladite face dorsale (5) et définissant un récipient agencé pour contenir ladite matière à infuser, dans une position dans laquelle ladite face frontale (5) est sensiblement verticale,
- des moyens d'injection agencés pour introduire un liquide d'infusion dans ladite capsule (3), lorsque ledit support (2) reçoit une capsule (3),
- une chambre d'infusion (1) présentant une ouverture sensiblement verticale (8), ladite ouverture sensiblement verticale (4) étant agencée pour être en communication fluidique avec ladite paroi filtrante, ladite bague (6) comportant des moyens d'étanchéité agencés pour maintenir la communication fluidique étanche par rapport à un milieu environnant, extérieur à une zone d'échange fluidique, et
- une sortie munie de moyens de fermeture/ouverture agencés pour permettre à un liquide infusé de s'écouler de la chambre d'infusion (1),
**caractérisé en ce qu'**il comprend en outre une tubulure d'injection dudit liquide d'infusion reliée à une partie supérieure de ladite chambre d'infusion (1) à proximité de ladite ouverture sensiblement verticale (8).

2. Dispositif selon la revendication 1, dans lequel ladite tubulure d'injection est prolongée d'un coude agencé pour injecter ledit liquide d'infusion au travers de ladite face frontale (4) de ladite capsule (3).

3. Dispositif selon l'une quelconque des revendications 1 et 2, comprenant en outre des moyens de nettoyage agencés pour introduire un liquide de rinçage dans ladite chambre d'infusion (1).

4. Dispositif selon l'une quelconque des revendications 1 à 3, comprenant un moyen de chauffage dudit liquide d'infusion et un réservoir de liquide d'infusion, relié ou comprenant ledit moyen de chauffage dudit liquide d'infusion.

5. Dispositif selon l'une quelconque des revendications 1 à 4, comprenant en outre pompe reliée d'une part à ladite tubulure d'injection de liquide d'infusion et à une alimentation de liquide d'infusion, éventuellement sous la forme dudit réservoir de liquide d'infusion, raccordée audit dispositif de chauffage dudit liquide d'infusion.

6. Dispositif selon l'une quelconque des revendications 1 à 5, comprenant en outre un dispositif régulateur de pression, relié à ladite tubulure d'injection de liquide d'infusion et à une alimentation de liquide d'infusion, éventuellement en amont ou en aval de ladite pompe, lorsqu'elle est présente.

7. Dispositif selon l'une quelconque des revendications précédentes, dans lequel ladite tubulure d'injection de liquide d'infusion présente une zone rectiligne, dont une extrémité est reliée à ladite chambre d'infusion (1), ladite zone rectiligne étant sensiblement verticale.

8. Dispositif selon la revendication 7, dans lequel ladite zone rectiligne de ladite tubulure d'injection de liquide d'infusion est solidaire de ladite chambre d'infusion (1) et est par exemple obtenue par moulage simultané de ladite chambre d'infusion (1) et de ladite zone rectiligne.

9. Dispositif selon l'une quelconque des revendications précédentes, dans lequel ladite chambre d'infusion (1) comporte un sommet par lequel passe un premier plan tangent de tête horizontal et un plan médian séparant la chambre d'infusion (1) en deux parties dont une première partie comporte ladite ouverture sensiblement verticale (8), ladite ouverture sensiblement verticale (8) présentant également un sommet par lequel passe un deuxième plan tangent horizontal, parallèle audit premier plan tangent de tête horizontal, ladite tubulure d'injection dudit liquide d'infusion étant reliée à ladite chambre d'infusion (1) au travers d'un orifice de passage de liquide d'infusion traversant une paroi extérieure de ladite chambre d'infusion (1), ledit orifice de passage de liquide d'infusion étant situé entre le premier et le deuxième plans tangents et dans ladite première partie.

10. Procédé de préparation de boissons infusées, comprenant les étapes de :
- introduction d'une capsule (3) contenant une matière à infuser à l'état sec munie d'une face frontale (4) comprenant une paroi filtrante, d'une bague (6) entourant ladite face frontale (4), d'une face dorsale (5), opposée à ladite face frontale (4) et d'une enveloppe solide (7) s'étendant entre ladite bague (6) et ladite face dorsale (5) et définissant un récipient agencé pour contenir ladite matière à infuser, dans une position dans laquelle ladite face frontale est sensiblement verticale, sur un support de capsule (3),
- injection d'un liquide d'infusion dans ledit récipient de ladite capsule (3),
- une infusion dudit liquide d'infusion avec ladite matière sèche à infuser de façon à former ladite boisson infusée dans ladite chambre d'infusion (1) en communication fluidique avec le récipient de la capsule (3), et
- une évacuation dudit liquide infusé par une ouverture localisée dans le fond de ladite chambre d'infusion (1) après ladite étape d'infusion,
**caractérisé en ce que** ladite injection d'un liquide d'infusion dans ledit récipient de ladite capsule (3) a lieu par injection dudit liquide d'infusion dans un ensemble constitué de la chambre d'infusion (1) en communication fluidique avec ledit récipient de ladite capsule (3), ledit liquide d'infusion percolant au travers de ladite paroi filtrante (11) pour pénétrer dans ledit récipient de la capsule (3) et dans ladite chambre d'infusion (1).

11. Procédé selon la revendication 10, dans lequel ledit liquide d'infusion pénètre au travers de la paroi filtrante (11) dans la capsule (3) et percole ensuite dans l'autre sens vers la chambre d'infusion (1).

12. Procédé selon la revendication 11, dans lequel une partie de l'étape d'infusion a lieu simultanément à ladite étape d'injection.

13. Procédé selon la revendication 11 ou la revendication 12, dans lequel ladite injection dudit liquide d'infusion est effectuée de haut en bas et provoque des turbulences dans le liquide d'infusion déjà présent dans la chambre d'infusion (1) et/ou dans le récipient de la capsule (3), de manière à homogénéisé le contenu du liquide d'infusion.

14. Procédé selon l'une quelconque des revendications 11 à 13, comprenant en outre une étape de nettoyage dans laquelle un fluide de rinçage est introduit et évacué de la chambre d'infusion (1).

15. Procédé selon l'une quelconque des revendications 11 à 14, comprenant en outre une étape d'évacuation de la capsule (3) de son support après évacuation dudit liquide infusé de la chambre d'infusion (1).

## Patentansprüche

1. Vorrichtung zum Zubereiten von Aufgussgetränken, umfassend:
- einen Halter (2), der eingerichtet ist, um eine Kapsel (3) aufzunehmen, die eine aufzugießende Substanz im trockenen Zustand enthält und mit einer Vorderseite (4), die eine Filterwand (11) umfasst, mit einem Ring (6), der die Vorderseite (4) umgibt, mit einer Rückseite (5), die der Vorderseite (4) gegenüberliegt, und mit einer festen Hülle (7), die sich zwischen dem Ring (6) und der Rückseite (5) erstreckt und einen Behälter, der eingerichtet ist, um die aufzugießende Substanz zu enthalten, in einer Position, in der die Vorderseite (5) im Wesentlichen senkrecht ist, definiert, versehen ist,
- Einspritzmittel, die eingerichtet sind, um eine Aufgussflüssigkeit in die Kapsel (3) einzuführen, wenn der Halter (2) eine Kapsel (3) aufnimmt,
- eine Aufgusskammer (1), die eine im Wesentlichen senkrechte Öffnung (8) aufweist, wobei die im Wesentlichen senkrechte Öffnung (4) eingerichtet ist, um mit der Filterwand in Fluidkommunikation zu stehen, wobei der Ring (6) Dichtungsmittel umfasst, die eingerichtet sind, um die Fluidkommunikation im Verhältnis zu einem umgebenden Umfeld außerhalb einer Fluidaustauschzone dicht zu halten, und
- einen Ausgang, der mit Verschluss-/Öffnungsmitteln versehen ist, die eingerichtet sind, um es einer aufgegossenen Flüssigkeit zu ermöglichen, in die Aufgusskammer (1) abzulaufen,
**dadurch gekennzeichnet, dass** sie ferner einen Schlauch zum Einspritzen der Aufgussflüssigkeit umfasst, der mit einem oberen Teil der Aufgusskammer (1) in der Nähe der im Wesentlichen senkrechten Öffnung (8) verbunden ist.

2. Vorrichtung nach Anspruch 1, wobei der Einspritzschlauch durch ein Winkelstück verlängert wird, das eingerichtet ist, um die Aufgussflüssigkeit durch die Vorderseite (4) der Kapsel (3) hindurch einzuspritzen.

3. Vorrichtung nach einem der Ansprüche 1 und 2, ferner umfassend Reinigungsmittel, die eingerichtet sind, um eine Spülflüssigkeit in die Aufgusskammer (1) einzuführen.

4. Vorrichtung nach einem der Ansprüche 1 bis 3, umfassend ein Mittel zum Erhitzen der Aufgussflüssigkeit und ein Reservoir für die Aufgussflüssigkeit, das mit dem Mittel zum Erhitzen der Aufgussflüssigkeit verbunden ist oder dieses umfasst.

5. Vorrichtung nach einem der Ansprüche 1 bis 4, ferner umfassend eine Pumpe, die einerseits mit dem Schlauch zum Einspritzen von Aufgussflüssigkeit und mit einer Aufgussflüssigkeitsquelle, gegebenenfalls in Form des Aufgussflüssigkeitsreservoirs, die an die Vorrichtung zum Erhitzen der Aufgussflüssigkeit angeschlossen ist, verbunden ist.

6. Vorrichtung nach einem der Ansprüche 1 bis 5, ferner umfassend eine Druckregelvorrichtung, die mit dem Schlauch zum Einspritzen von Aufgussflüssigkeit und mit einer Aufgussflüssigkeitsquelle, gegebenenfalls stromaufwärts oder stromabwärts von der Pumpe, soweit diese vorhanden ist, verbunden ist.

7. Vorrichtung nach einem der vorhergehenden Ansprüche, wobei der Schlauch zum Einspritzen von Aufgussflüssigkeit eine gerade Zone aufweist, deren eines Ende mit der Aufgusskammer (1) verbunden ist, wobei die gerade Zone im Wesentlichen senkrecht ist.

8. Vorrichtung nach Anspruch 7, wobei die gerade Zone des Schlauchs zum Einspritzen von Aufgussflüssigkeit mit der Aufgusskammer (1) fest verbunden ist und beispielsweise durch gleichzeitiges Formen der Aufgusskammer (1) und der geraden Zone erzielt wird.

9. Vorrichtung nach einem der vorhergehenden Ansprüche, wobei die Aufgusskammer (1) einen Scheitelpunkt umfasst, durch den eine erste waagerechte Kopftangentialebene und eine Mittelebene, welche die Aufgusskammer (1) in zwei Teile trennt, von denen ein erster Teil die im Wesentlichen senkrechte Öffnung (8) umfasst, gehen, wobei die im Wesentlichen senkrechte Öffnung (8) auch einen Scheitelpunkt aufweist, durch den eine zweite waagerechte Tangentialebene geht, die zu der ersten waagerechten Kopftangentialebene parallel ist, wobei der Schlauch zum Einspritzen der Aufgussflüssigkeit mit der Aufgusskammer (1) durch eine Mündung zum Durchgang von Aufgussflüssigkeit hindurch, die eine Außenwand der Aufgusskammer (1) durchquert, verbunden ist, wobei sich die Mündung zum Durchgang von Aufgussflüssigkeit zwischen den ersten und zweiten Tangentialebenen und in dem ersten Teil befindet.

10. Verfahren zum Zubereiten von Aufgussgetränken, umfassend folgende Schritte:
- Einführen einer Kapsel (3), die eine aufzugießende Substanz im trockenen Zustand enthält und mit einer Vorderseite (4), die eine Filterwand (11) umfasst, mit einem Ring (6), der die Vorderseite (4) umgibt, mit einer Rückseite (5), die der Vorderseite (4) gegenüberliegt, und mit einer festen Hülle (7), die sich zwischen dem Ring (6) und der Rückseite (5) erstreckt und einen Behälter, der eingerichtet ist, um die aufzugießende Substanz zu enthalten, in einer Position, in der die Vorderseite (5) im Wesentlichen senkrecht ist, auf einem Kapselhalter (3) definiert, versehen ist,
- Einspritzen einer Aufgussflüssigkeit in den Behälter der Kapsel (3),
- Aufgießen der Aufgussflüssigkeit mit der aufzugießenden Trockensubstanz, um das Aufgussgetränk in der Aufgusskammer (1) in Fluidkommunikation mit dem Behälter der Kapsel (3) zu bilden, und
- Entleeren der aufgegossenen Flüssigkeit durch eine Öffnung, die sich in dem Boden der Aufgusskammer (1) befindet, nach dem Schritt des Aufgießens,
**dadurch gekennzeichnet, dass** das Einspritzen einer Aufgussflüssigkeit in den Behälter der Kapsel (3) durch Einspritzen der Aufgussflüssigkeit in eine Baugruppe, die aus der Aufgusskammer (1) in Fluidkommunikation mit dem Behälter der Kapsel (3) besteht, erfolgt, wobei die Aufgussflüssigkeit durch die Filterwand (11) hindurch perkoliert, um in den Behälter der Kapsel (3) und in die Aufgusskammer (1) einzudringen.

11. Verfahren nach Anspruch 10, wobei die Aufgussflüssigkeit durch die Filterwand (11) hindurch in die Kapsel (3) eindringt und dann in der anderen Richtung zu der Aufgusskammer (1) perkoliert.

12. Verfahren nach Anspruch 11, wobei ein Teil des Schritts des Aufgießens gleichzeitig mit dem Schritt des Einspritzens erfolgt.

13. Verfahren nach Anspruch 11 oder 12, wobei das Einspritzen der Aufgussflüssigkeit von oben nach unten erfolgt und in der Aufgussflüssigkeit, die sich bereits in der Aufgusskammer (1) befindet, und/oder in dem Behälter der Kapsel (3) Wirbel hervorruft, um den Inhalt der Aufgussflüssigkeit zu vermischen.

14. Verfahren nach einem der Ansprüche 11 bis 13, ferner umfassend einen Reinigungsschritt, bei dem ein Spülfluid eingeführt und aus der Aufgusskammer (1) entleert wird.

15. Verfahren nach einem der Ansprüche 11 bis 14, ferner umfassend einen Schritt des Abnehmens der Kapsel (3) aus ihrem Halter nach dem Entleeren der aufgegossenen Flüssigkeit aus der Aufgusskammer (1).

## Claims

1. Device for preparing infused drinks comprising:
- a support (2) arranged to receive a capsule (3) containing material to be infused in dry state provided with a front face (4) comprising a filter wall (11), a ring (6) surrounding said front face (4), a rear face (5), opposite said front face (4) and a solid casing (7) extending between said ring (6) and said rear face (5) and defining a container arranged to contain said material to be infused, in a position in which said front face (5) is substantially vertical,
- injection means arranged to introduce an infusion liquid into said capsule (3), when said support (2) receives a capsule (3),
- an infusion chamber (1) having a substantially vertical opening (8), said substantially vertical opening (4) being arranged to be in fluid communication with said filter wall, said ring (6) comprising sealing means arranged to maintain the fluid communication sealed with respect to a surrounding medium, outside a fluid exchange zone, and
- an outlet provided with closing/opening means arranged to allow an infused liquid to flow from the infusion chamber (1), **characterised in that** it further comprises a pipe for injecting said infusion liquid connected to an upper portion of said infusion chamber (1) in the vicinity of said substantially vertical opening (8).

2. Device according to claim 1, wherein said injection pipe is extended by an elbow arranged to inject said infusion liquid through said front face (4) of said capsule (3).

3. Device according to any one of claims 1 and 2, further comprising cleaning means arranged to introduce a rinsing liquid into said infusion chamber (1).

4. Device according to any one of claims 1 to 3, comprising means for heating said infusion liquid, and a reservoir of infusion liquid, connected or comprising said means for heating said infusion liquid.

5. Device according to any one of claims 1 to 4, further comprising a pump connected on the one hand to said injection pipe for injecting infusion liquid and to a supply of infusion liquid, possibly in the form of said reservoir of infusion liquid, connected to said means for heating said infusion liquid.

6. Device according to any one of claims 1 to 5, further comprising a pressure regulator device, connected to said injection pipe for injecting infusion liquid and to a supply of infusion liquid, possibly upstream or downstream of said pump, when it is present.

7. Device as claimed in any one of the preceding claims, wherein said injection pipe for injecting infusion liquid has a straight zone, of which one end is connected to said infusion chamber (1), said straight zone being substantially vertical.

8. Device according to claim 7, wherein said straight zone of said injection pipe for injecting infusion liquid is fast with said infusion chamber (1) and is for example obtained by simultaneous moulding of said infusion chamber (1) and of said straight zone.

9. Device as claimed in one of the preceding claims, wherein said infusion chamber (1) comprises a top through which passes a first horizontal tangent head plane and a median plane separating the infusion chamber (1) into two portions of which a first portion comprises said substantially vertical opening (8), said substantially vertical opening (8) also having a top through which passes a second horizontal tangent plane, parallel to said first horizontal tangent head plane, said injection pipe for injecting said infusion liquid being connected to said infusion chamber (1) through an orifice for the flow of infusion liquid passing through an outer wall of said infusion chamber (1), said orifice for the passage of infusion liquid being located between the first and the second tangent planes and in said first portion.

10. Method for preparing infused drinks, comprising the steps of:
- introducing a capsule (3) containing material to be infused in dry state provided with a front face (4) comprising a filter wall, a ring (6) surrounding said front face (4), a rear face (5), opposite said front face (4) and a solid casing (7) extending between said ring (6) and said rear face (5) and defining a container arranged to contain said material to be infused, in a position in which said front face is substantially vertical, on a capsule support (3),
- injecting an infusion liquid into said container of said capsule (3),
- infusing said infusion liquid with said dry matter to be infused in order to form said infused drink in said infusion chamber (1) in fluidic communication with the container of the capsule (3), and
- removing said infused liquid via an opening located in the bottom of said infusion chamber (1) after said step of infusion,
**characterised in that** said injecting an infusion liquid into said container of said capsule (3) takes place by injecting said infusion liquid into an assembly constituted of the infusion chamber (1) in fluidic communication with said container of said capsule (3), said infusion liquid percolating through said filter wall (11) in order to penetrate into said container of the capsule (3) and into said infusion chamber (1).

11. Method according to claim 10, wherein said infusion liquid penetrates through the filter wall (11) into the capsule (3) and then percolates in the other direction towards the infusion chamber (1).

12. Method according to claim 11, wherein a portion of the infusion step takes place simultaneously with said injection step.

13. Method according to claim 11 or claim 12, wherein said injection of said infusion liquid is carried out from top to bottom and causes turbulences in the infusion liquid already present in the infusion chamber (1) and/or in the container of the capsule (3), in such a way as to homogenise the content of the infusion liquid.

14. Method according to any one of claims 11 to 13, further comprising a cleaning step wherein a rinsing fluid is introduced and removed from the infusion chamber (1).

15. Method according to any one of claims 11 to 14, further comprising a step of removing the capsule (3) from its support after removing said infused liquid from the infusion chamber (1).
